## Europäisches Patentamt
## European Patent Office
## Office européen des brevets

(11) Veröffentlichungsnummer: **0 349 711**
A2

(12) **EUROPÄISCHE PATENTANMELDUNG**

(21) Anmeldenummer: **89105395.1**

(22) Anmeldetag: **27.03.89**

(51) Int. Cl.4: **B67D 5/22** , **G01F 15/06**

(30) Priorität: **08.07.88 IT 2130488**

(43) Veröffentlichungstag der Anmeldung:
**10.01.90 Patentblatt 90/02**

(84) Benannte Vertragsstaaten:
**AT BE CH DE ES FR GB GR IT LI LU NL SE**

(71) Anmelder: **ABB DACOM S.P.A.**
**Piazzale Lodi, 3**
**I-20137 Milano(IT)**

(72) Erfinder: **Greco, Gianluca**
**Via La Spezia, 4**
**I-43100-Parma(IT)**
Erfinder: **Forcella, Piersandro, Dott. Ing.**
**Viale M. Merisio, 18**
**I-24047-Treviglio (BG)(IT)**

(74) Vertreter: **Mayer, Hans Benno**
**de Dominicis & Mayer Piazzale Marengo 6**
**I-20121 Milano(IT)**

(54) **Rechnergesteuerte Vorrichtung fuer die automatische Verteilung von Brennstoffen aus einem Tankwagen.**

(57) Rechnergesteuerte Vorrichtung zur automatischen Verteilung von Brennstoffen, Fluessiggasen oder anderen Fluiden aus einem Tankwagen in die Tanks der Verbraucher, unter Verwendung eines an Bord des Tankwagens vorgesehenen Rechners und einer Kontrolleinheit, die mit dem Rechner ueber ein Interface wirkverbunden ist und zwei Leistungsausgaenge fuer die Steuerung von Elektroventilen aufweist, wobei der Kontrolleinheit Informationssignale ueber Menge des verteilten Brennstoffes oder Fluessiggases,sowie Daten hinsichtlich des Betriebszustandes des Motors (laufender Motor/stehender Motor) zugeleitet werden. Um eine groesstmoegliche Funktionssicherheit zu gewaehrleisten, wird zur Messung des verteilten Fluids ein optischer Sensor verwendet, dem eine mit Ausnehmungen versehene rotierende Scheibe, sowie ein optisch leitendes Faserkabel fuer den Vorlauf bzw. den Ruecklauf der optischen Signale zugeordnet ist. Ferner, um zusaetzliche Eichungen zu vermeiden, ist der Sensor auf einer Verlaengerung der Welle einer geeichten, mechanischen Volumensmessvorrichtung des Tankwagens angeordnet.

Es wird eine Thermosonde vorgesehen, die ebenfalls mit der Kontrolleinheit wirkverbunden ist, um dadurch eine groessere Genauigkeit bei der Messwerterfassung zu gewaehrleisten. Die Vorrichtung erlaubt es, statistische Werte fuer die einzelnen Liefer-und Verteilvorgaenge aufzuzeichnen.

FIG. 2

## Rechnergesteuerte Vorrichtung fuer die automatische Verteilung von Brennstoffen aus einem Tankwagen

Die vorstehende Erfindung betrifft eine rechnergesteuerte Vorrichtung fuer die Verteilung von Brennstoffen oder anderen Fluiden, besonders eines brennbaren Fluessigkeitsgases, aus einem Tankwagen.

Zur Zeit erfolgt der Transport und die Verteilung derartiger gasfoermiger Brennstoffe an kleinere, oertliche Tanks der Verbaucher (Wohngemeinschaften, Abfuelltanks und aehnliche Einrichtungen) unter Einsatz von Tankwagen, die mit mechanischen Einrichtungen zur Erfassung der verteilten Fluessiggasmenge ausgeruestet sind. Der Verteilungsvorgang erfolgt unter der direkten Kontrolle des Tankwagenfahrers.

Der Vertrieb von Fluessiggas kann auch mittels abgefuellter Gasflaschen erfolgen. In diesem Fall, da der Inhalt und die Merkmale der Gasflaschen festgelegt und bekannt sind, ist der Vertriebsvorgang, die Ueberpruefung und die Rechnungslegung verhaeltnismaessig einfach und konnte bereits einer Automatisierung unterzogen werden.

Die Verteilung von Fluessiggas aus einem Tankwagen in die oertlichen Vorratstanks wird aber immer noch vom Fahrer des Tankfahrzeuges vorgenommen. Der Fahrer stellt die Verbindung des Abfuellschlauches mit dem Lagertank her, oeffnet entsprechende Ventile, ueberprueft den Abfuellvorgang und unterbricht diesen Vorgang nach Abfuellen der gewuenschten Fluessiggasmenge oder dann, wenn der oertliche Lagertank vollstaendig gefuellt ist. Im Anschluss daran hat der Fahrer des Tankwagens Lieferscheine auszufuellen, die fuer die spaeter erfolgende Rechnungsstellung erforderlich sind.

Bei dieser Art der Verteilung des Fluessiggases stehen zwei wesentliche Hindernisse einer Automatisierung des Verteilvorganges entgegen. Einmal erfordert eine automatische Verteilung, die ueber ein Rechnerprogramm gesteuert werden soll, ein staendiges Messen der abgegebenen Fluessiggmenge, wobei die gemessenen Werte staendig einem Rechner zugeleitet werden muessen, um somit den Abfuellvorgang zu steuern. Dieser Messvorgang erfordert aber die Vorsehung eines zusaetzlichen Sensors, was zu Schwierigkeiten hinsichtlich der notwendige Sicherheitsvorschriften fuehren wuerde (Sensor mit elektrischem Stromkreis in explosionsgefaehrdeter Umgebung). Desweiteren ist Bedingung fuer ein automatisches Abfuellen die Einhaltung der vorgeschriebenen Messgenauigkeit (amtliche Zulassung und Pruefung des Sensors zur Messung des abgefuellten Fluessiggases).

Des weiteren muesste eine Einrichtung der beschriebenen Art in einfacher Weise auf einem Tankwagen montierbar sein, die Vorrichtung muesste auch schnell und einfach bei Stoerungen oder Schaeden demontierbar sein und ferner muesste eine solche Vorrichtung kostenguenstig herstellbar sein, um tatsaechliche Einsparungen bezueglich der entstehenden Lieferkosten fuer den Verbraucher zu gewaehrleisten. Es waere auch ratsam, mit einem derartigen Geraet noch weitere Daten und Informationen zu erstellen und zu speichern, z.B. hinsichtlich der durchgefuehrten Abfuell-und Verteilvorgaenge, die fuer die Auswertung von statistischen Erhebungen und Verbesserungen des Vertriebssystems, sowie zur Berechnung der gelieferten Brennstoffmengen herangezogen werden koennten.

Es ist Aufgabe der vorstehenden Erfindung, die Nachteile des Standes der Technik zu vermeiden und eine automatische, rechnergesteuerte Einrichtung fuer die Verteilung von Brennstoffen, wie z.B. Fluessiggas oder anderen Fluiden aus einem Tankwagen vorzuschlagen, mit welcher erfindungsgemaessen Vorrichtung die beschriebenen Nachteile zu vermeiden sind, wobei die Vorrichtung explosionsgeschuetzt ausfuehrbar ist, keine weiteren amtlichen Zulassung oder Eichungen der Messeinrichtung fuer das verteilte Fluessiggas bedarf und ferner die Moeglichkeit eroeffnet, zusaetzliche Informationen ueber den Verteil- und Liefervorgang aufzuzeichnen. Die Einrichtung soll kostenguenstig herstellbar sein und ueber ein Interface mit einer an sich bekannten Recheneinrichtung verbindbar sein, Rechner der fuer eine Vielzahl ueblicher, kaufmaennischer Vorgaengen programmierbar ist, wie z.B. Verkaufs- und Liefervorgaenge, auch fuer andersartige Erzeugnisse. Diese Aufgabe wird durch die erfindungsgemaesse Vorrichtung geloest, die aus einer Recheneinheit fuer die Steuerung des automatischen Vertriebs eines Fluids, wie Brennstof, z.B. Fluessiggas, aus einem Tankwagen besteht und sich dadurch kennzeichnet, dass

- ein optischer Sensor-Transduktor einer mechanischen Volumensmesseinrichtung des Tankwagens zugeordnet ist;
- eine Steuereinheit mit einem Bordrechner des Tankwagens verbunden ist und die Steuerung des Abfuellvorganges des Fluessigkeitsgases uebernimmt; und
- eine optische Vorlauf- und Ruecklaufleitung zwischen dem Sensor-Transduktor und der Steuereinheit angeordnet ist.

Entsprechend einer vorteilhaften Ausfuehrungsform gemaess Anspruch 2 weist der Sensor-Transduktor eine am Umfang mit Ausschnitten versehene Scheibe auf, die drehbar auf einer Verlaengerung der Arbeitswelle der Volumensmesseinrichtung des Tankwagens angeordnet ist. Durch die Vorsehung einer mit Ausnehmungen versehenen, drehbar angeordneten Scheibe besteht die Moeglichkeit, periodisch einen Lichtstrahl zwischen der Vorlauf- und Ruecklaufleitung zu unterbrechen.

Es kann also in der Naehe der tatsaechlichen Abfuellvorrichtung fuer das Fluessiggas auf die Vorsehung von elektrischen Geraeten oder elektrischen Schaltkreisen verzichtet werden, was zu einer groesstmoeglichen Sicherheit (Ausschluss von Explosionsgefahr) fuehrt. Desweiteren ist es nicht erforderlich, eine zweite amtliche Zulassung (Eichung) fuer den vorgeschlagenen Sensor-Transduktor vorzunehmen, da durch die erfindungsgemaesse Vorrichtung die amtlich geeichte mechanische Mess- und Ableseeinheit nicht ersetzt wird, sondern lediglich Messdaten abgenommen und weitergeleitet werden.

Desweiteren, wie den Unteranspruechen 3 und 4 zu entnehmen ist, besteht die optische Wirkverbindung aus einem optisch leitenden Faserkabel, das durch eine geschlitzte, blockartigen Vorrichtung unterbrochen ist; in dieser geschlitzten Vorrichtung stehen sich im Schlitz die Enden der beiden Faserkabel gegenueber. Das Kabel weist zwei optisch leitende, getrennte Faserbuendel auf, die im geschlitzten Block mit einem derartigen gegenseitigen Abstand angeordnet sind, der kleiner ist als die Breite der Ausnehmungen in der Scheibe. Auf diese Weise kann die Einrichtung tatsaechliche Impulse, die von einer Drehbewegung der mit Ausnehmungen versehenen Scheibe herruehren, von einer zufaelligen Lage der Scheibe ohne tatsaechliche Drehung derselben und daher unabhaengig von einer Fluessigkeitsverteilung unterscheiden.

Weitere Merkmale der Erfindung mit den entsprechenden technischen Vorteilen koennen der nun folgenden Beschreibung, den Unteranspruechen und den Zeichnungen entnommen werden. Es zeigen:

Fig. 1 ein Schema der erfindungsgemaessen Vorrichtung zur Darstellung ihrer Arbeitsweise;

Fig. 2 in perspektivischer Ansicht, teilweise im Schnitt, den Sensor-Transduktor der erfindungsgemaessen Einrichtung; und

Fig. 3 einen Teilschnitt des Sensors gemaess Fig. 2.

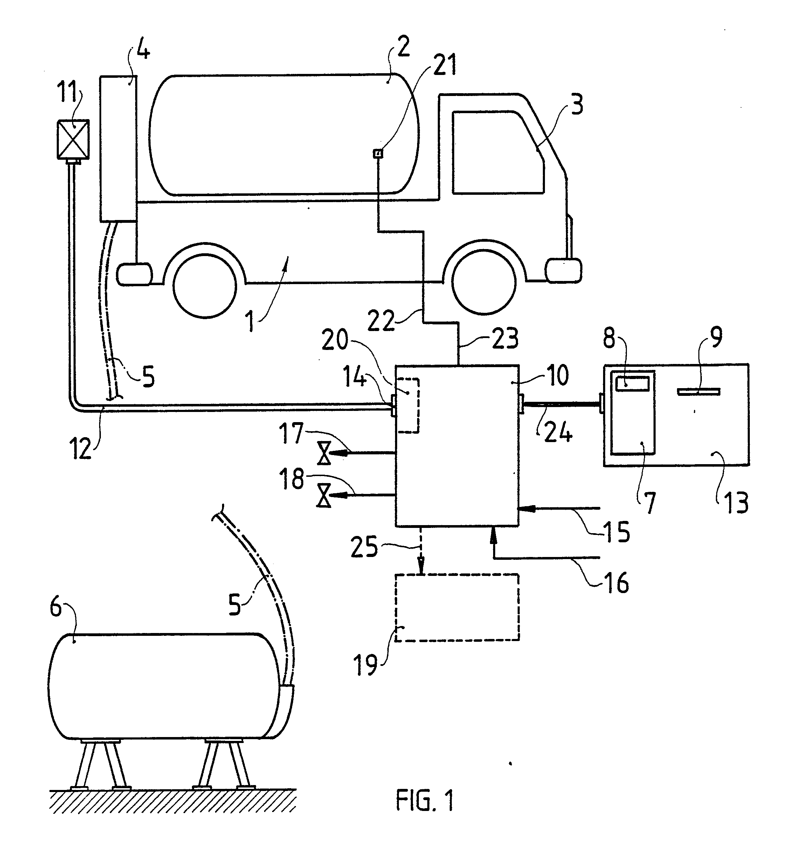

In Fig. 1 ist ein Tankwagen 1 dargestellt, der mit einem Tank 2, einem Fuehrerhaus 3 und einer Verteilvorrichtung 4 versehen ist. Fuer den Abfuellvorgang wird ein Schlauch 5 (gestrichelt dargestellt) mit einem oertlich vorgesehenen Lagertank 6 fuer den Abfuellvorgang verbunden. Zur Vereinfachung wird die Vorrichtung anhand eines Blockschaltbildes dargestellt, das getrennt vom Fahrzeug dargestellt ist, in Wirklichkeit aber am Fahrzeug montiert ist, wie dies der folgenden Beschreibung zu entnehmen ist.

Die Vorrichtung besteht aus einer Recheneinheit 7, die an sich vom Stand der Technik bekannt ist und bereits fuer kaufmaennische Rechenvorgaenge eingesetzt wird. Die Recheneinheit 7 weist ein Anzeigefeld 8 auf, z.B. ein aus Fluessigkristallen bestehendes Display, mit dem die elektrische Stromaufnahme in Grenzen gehalten wird. Das Anzeigefeld ist mit einer Beleuchtungsvorrichtung ausgeruestet, um den Einsatz der Recheneinheit auch an dunkleren Orten zu ermoeglichen. In vorteilhafter Weise, wie dies in der Zeichnung dargestellt ist, ist die Recheneinheit 7 als tragbares Handgeraet ausgefuehrt, das heisst die Recheneinheit 7 kann einer Schutzhuelle 13, die z.B. im Fahrerhaus angeordnet ist, entnommen werden und waehrend des Abfuellvorganges in der Hand gehalten werden. Die Schutzhuelle 13 nimmt in vorteilhafter Weise auch eine Druckvorrichtung auf. Mit dieser Druckvorrichtung koennen Schriftstuecke erstellt werden, wie z.B. Lieferscheine, Rechnungen oder aehnliche Dokumente. Diese laufen aus einem Schlitz 9 der Druckvorrichtung, wie schematisch in Fig. 1 dargestellt ist, aus. Die Rechenvorrichtung weist ferner ein eingebautes Uhrwerk sowie einen Datumsgeber auf, ferner sind akustische Anzeigevorrichtungen, die hinsichtlich Frequenz und Betriebsdauer programmierbar sind, vorgesehen. Im Bedarfsfall ist ferner ein vor Feuchtigkeit geschuetztes Tastenfeld mit moeglichst geringer Bauhoehe fuer die alphanumerischen oder numerischen Tasten vorgesehen.

Im Inneren der Schutzhuelle 13 sind ein Stromspeicher, z.B. ein NiCd- Stromspeicher, im Bedarfsfall ein aufladbarer Stromspeicher oder austauschbare Batterien sowie Back-up Batterien, die ebenfalls aufladbar ausgebildet sein koennen, vorgesehen. Die Back-up Batterien arbeiten bei Austausch der Hauptbatterien. Als Back-up Geraet ist in vorteilhafter Weise eine Lithiumbatterie vorgesehen, somit koennen die im Speicher der Recheneinheit befindlichen Daten vor Loeschen geschuetzt werden. Durch die letztgenannte Batterieart wird ein Aufrechterhalten der gespeicherten Daten auch ohne aeussere Stromzufuhr fuer mindestens fuenf Jahre gewaehrleistet. Erfindungsgemaess weist die erfindungsgemaesse Vorrichtung auch eine Hauptsteuereinheit 10 auf, die auch als Konzentrator bezeichnet ist. Auch der Konzentrator weist den Aufbau eines Mikrocomputers auf und ist mit einer gewissen Anzahl von Signal-Eingaengen und Signal-Ausgaengen versehen. Genauer gesagt weist die Hauptsteuereinheit 10 einen digitalen Eingang 15 auf; ueber diesen Eingang werden der Einheit 10 Informationen hinsichtlich des Betriebszustandes des Motors (laufender Motor oder stehender Motor) zugefuehrt. Diese Daten sind besonders wichtig fuer die Erfassung der Stillstandszeit und der Transport- oder Fahrzeit des Tankwagens. Eine Einheit 16 ist hingegen mit einem Odometer verbunden.

Der Hauptsteuereinheit 10 werden ueber einen Eingang 14 Signale zugefuehrt, die von einem optischen Sensor 11, der im Anschluss noch genauer beschrieben wird, zugefuehrt werden. Die Einheit 10 ist in zwei Richtungen mit den Rechner 7 ueber eine bidirektionale Verbindung 24 (Bus), die mit der Aufnahme 13 des Rechners in Wirkverbindung steht, verbunden. Es besteht ferner die Moeglichkeit, ein zusaetzliches Anzeigegeraet 19 vorzusehen, das mit der Einheit 10 ueber eine parallel oder in Serie geschaltete Leitung 25 verbunden ist.

Ein im Inneren des Tanks 2 vorgesehener Thermofuehler 21 ist ueber eine Leitung 22 mit einem Eingang 23 der Recheneinheit 10 wirkverbunden. Der Thermofuehler 21 erzeugt eine elektrische Spannung, in Abhaengigkeit von der Temperatur im Inneren des Tankes 2. Das erzeugte Spannungssignal ist ausgesprochen leistungsschwach und daher ungefaehrlich, die Messung der im Inneren des Tanks 2 vorherrschenden Temperatur gibt jedoch der Recheneinheit 10 wichtige Informationen ueber die Gastemperatur und somit hinsichtlich der tatsaechlich abgegebenen Fluessigkeitsmenge. Die Hauptrecheneinheit 10 weist zwei Leistungsausgaenge 17 und 18 auf, die geeignet sind, Elektroventile zu steuern oder ueber ein Signal, z.B. den Antrieb einer Lieferpumpe zu veranlassen oder Schieber im Abfuehrschlauches 5 zu schliessen oder zu oeffnen. Das Schutzgehaeuse 13 ist in vorteilhafterweise als Metallgehaeuse ausgebildet, das z.B. im Fahrerhaus 3 angeordnet ist. Dabei erfolgt die Montage der Schutzhuelle 13 im Fahrerhaus derartig, dass keine Stoerung des Fahrers erfolgt, desweiteren sind bei der Montage des Schutzgehaeuses die baulichen Gegebenheiten des Fahrerhauses zu beruecksichtigen. In vorteilhafter Weise wird das Schutzgehaeuse an der Rueckwand im Inneren des Fahrerhauses montiert.

Mit der Recheneinheit 10 ist ein optischer Sensor 11 wirkverbunden, dies ueber ein optisches Faserleitkabel 12. Die Leitung 12 weist ein Faserbuendel fuer den Vorlauf und ein Faserbuendel fuer den Ruecklauf der Lichtsignale auf. Die Lichtsignale werden in bekannter Weise in der Vorrichtung 20 gebildet und dem Kabel ueber eine Steckerverbindung 14 zugeleitet. Im optischen Sensor 11 wird die Lichtuebertragung periodisch unterbrochen. Somit werden Lichtimpulse gebildet, die ueber das zweite optisch leitende Faserbuendel dem Stecker 14 und einer Empfangsvorrichtung (Fotodiode, PIN-Diode oder aehnliche Einrichtung) zugefuehrt werden. Aufgrund der Anzahl der empfangenen Lichtimpulse kann die Menge des verteilten Fluessiggases festgestellt werden und diese ermittelte Menge wird in einer Anzeigevorrichtung 19 aufgezeigt und dient zur Unterbrechung des Liefervorganges bei Erreichen einer vorbestimmten Abfuellmenge. Die Anzeige am Display 19 wird in vorteilhafter Weise dazu genuetzt, den aufgezeigten Wert mit der Anzeige am mechanisch arbeitenden Volumenzaehler, der ueblicherweise an derartigen Tankwagen angeordnet ist, zu vergleichen. Da mit dem mechanischen Volumenmesser der optische Sensor 11 wirkverbunden ist, muessen die beiden Anzeigen bei ordnungsgemaess funktionierender Vorrichtungen uebereinstimmen.

Die Vorrichtung 20 ist in Fig. 1 gestrichelt dargestellt, da sie unter Umstaenden fest mit dem Aufbau des Tankfahrzeuges bei abklappbarem Fahrerhaus verbunden ist, um den Abstand zwischen der Vorrichtung und dem Sensor 11 und somit die Laenge des optischen Faserkabels 12 konstant zu halten.

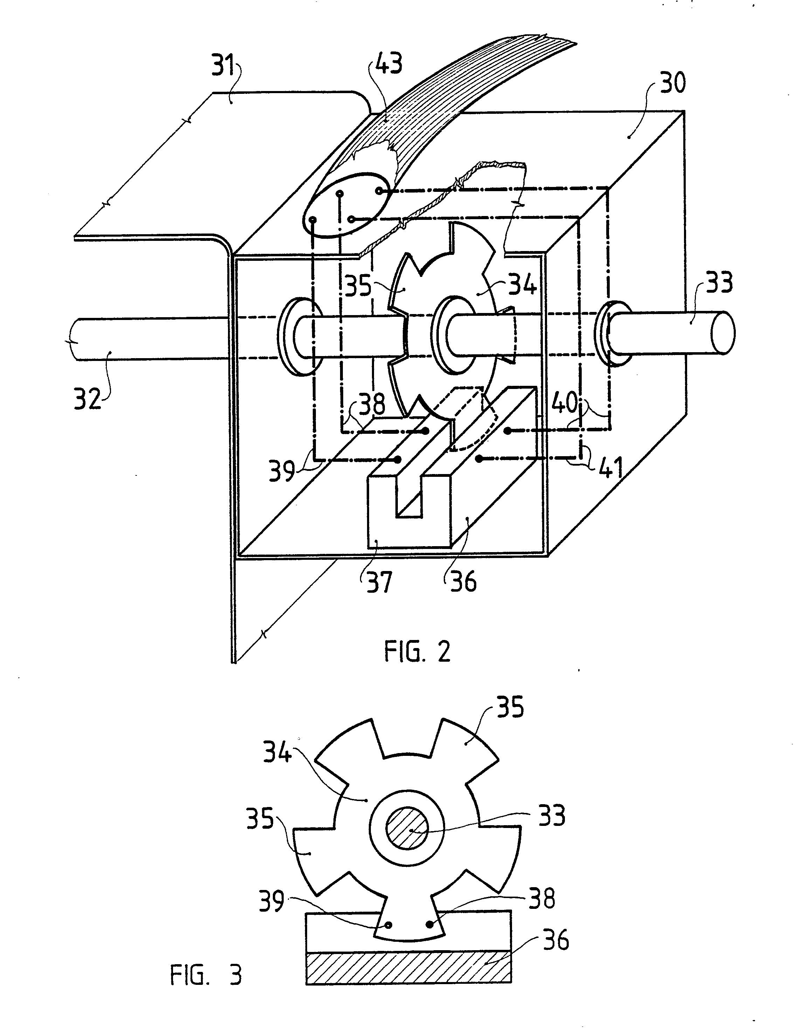

Unter Bezugnahme auf Fig. 2 und 3 wird nun der Aufbau des optischen Sensors, der fuer die erfindungsgemaesse Vorrichtung Einsatz findet, beschrieben.

Der Sensor 11 ist in einem Gehaeuse 30 angeordnet, das nach Art eines Wuerfels ausgebildet ist und eine Welle 33 aufweist, die mit einer Verlaengerung 32 der Welle des mechanischen Volumenmessgeraetes wirkverbunden ist. Das Geraet zur Messung des abgefuellten Volumens ist Bestandtei des Tankwagens und wurde einer offiziellen Eichung unterworfen. Das Volumenmessgeraet ist in Fig. 2 nicht dargestellt; in dieser Zeichnung ist nur der Rahmen 31 des Messgeraetes gezeigt, an dem das Gehaeuse 30 zur Aufnahme des Sensors befestigt wird.

Die Welle 33 traegt Scheibe 34, die an ihrem Umfang mit Ausschnitten 35 oder vorspringenden Sektoren ausgeruestet ist, die in Umfangsrichtung gleichmaessig verteilt sind. Die Scheibe 34 ist drehbar im Schlitz 37, der in die Vorrichtung 36 eingearbeitet ist, angeordnet. Das optisch leitende Faserkabel 38, 39; 40, 41 erreicht das Innere des Gehaeuses 30 ueber eine Schutzhuelle 43. Im Inneren des Gehaeuses 30 ist das Kabel 38, 39; 40, 41 unterbrochen und mit sich gegenueberliegenden Enden 38, 39, 40, 41 im Inneren des Geraetes 36 montiert. Unter Bezugnahme auf die Ausfuehrungsform gemaess Fig. 2 und 3 wird deutlich, dass das Kabel 12 aus zwei optisch leitenden Faserbuendeln besteht, das heisst ein Faserbuendel 38 wird fuer den Vorlauf der Impulse und ein Faserbuendel 39 fuer den Ruecklauf der Impulse eingesetzt. Die Enden der Faserbuendel stehen sich auf einer Seite der Vorrichtung 36 innerhalb des Schlitzes 37 gegenueber. Auf der zweiten Seite der Vorrichtung sind die Enden 40 und 41 von zwei weiteren, optisch leitenden Faserbuendel 40, 41 (Faserbuendel fuer den Ruecklauf) vorgesehen, und diese sind ueber die Leitung 12 und den Stecker 14 mit Fotoempfaengern der Vorrichtung 20 wirkverbunden.

Die Arbeitsweise des Sensors ist folgende:

Die Drehbewegung der Welle 32 des Volumenmessers wird ueber die Verlaengerung an die Welle 33 uebertragen und bringt die Scheibe 34 zur Drehung. Waehrend der Drehbewegung erfolgt durch die Sektoren 35 periodisch eine Unterbrechung der Lichtuebertragung in der optischen Leitungen 12. die Unterbrechung der Lichtleitung erfolgt mit einer Frequenz, die proportional zur Drehgeschwindigkeit der Welle 32, 33 ist und daher proportional zur abgegebenen Fluessiggasmenge.

In anderen Worten: Bei jedem Durchlauf eines Sektors 35 im Schlitz 37 wird ein negativer optischer Impuls erzeugt. Entsprechend dem dargestellten Ausfuehrungsbeispiel ist auf jeder Seite der Vorrichtung 36 ein Paar optisch leitender Faserbuendel 38, 39; 40, 41 vorgesehen, die Faserbuendel eines jeden Leiters sind voneinander mit derartigem Abstand angeordnet, der kleiner als die Breite des Sektors 35 ist. (Fig. 3) Auf diese Weise werden stets zwei Impulse erzeugt, einer fuer jedes Faserbuendel und jeweils in Uebereinstimmung mit dem Durchlauf eines Sektors 35. Die erzeugten Impulse sind zeitlich zueinander versetzt. Dank dieser Vorsehen ist es moeglich, eine tatsaechliche Drehbewegung der welle 33 zu diskriminieren und eine eventuelle Schwenkbewegung der Scheibe 34 um eine Ruhelage eines Sektors 35 festzustellen, Bewegung, die zu einer unrichtigen Erfassung der abgegebenen Menge fuehren koennte. Aus der vorangegangenen Beschreibung wird ersichtlich, dass die Arbeitsweise des Sensors 36 aehnlich einem Impulszaehler ist. Die Vorrichtung 36 wird aber nicht durch elektrische Energie gespeist, sie zeichnet sich daher durch einen besonderes hohen Sicherheitsgrad aus. Die durch den Sensor erstellten Werte ersetzen auch nicht das Ablesen an der geeichten, mechnischen Vorrichtung, es werden mit ihr aber die notwendigen Informationen erfasst, die an die Einrichtung 10 zu uebertragen sind. Es besteht jederzeit die Moeglichkeit, die Richtigkeit der uebertragenen Daten ueber das Ablesefenster 19 des mechanisch arbeitenden Volumenzaehlers zu kontrollieren und zu ueberpruefen. Fuer die Montage des Sensors ist lediglich eine Verlaengerung 33 der Welle 32 des bereits vorhandenen Volumenmessers erforderlich.

Ferner, dank der Verwendung eines optisch leitenden Faserkabels 38, 39; 40, 41, wird eine Uebertragung der erfassten Informationen vom Transduktor ohne Zuhilfenahme elektrischem Strom an die zentrale Steuereinheit uebertragen.

Die verwendeten Bauteile sind genormte Bauteile und sind einfach austauschbar. Somit wird die Wartung des Geraetes auf ein groesstmoegliches Mass vereinfacht, es ist lediglich erforderlich, baukastenartig ausgebildete Bauteile bei Stoerung auszutauschen. Es besteht die Moeglichkeit, Reparaturen der Bauteile spaeter in der Werkstatt durchzufuehren. Die vorgeschlagene Einrichtung ist einfach zu montieren und an die verschiedenen Tankfahrzeuge und besonders Rechner, die bereits fuer andersartige kaufmaennische Vorgaenge Verwendung finden, anpassbar, da ueber die Steuereinheit 10 und die Leitung 24 die eingespeisten Signale und Informationen entsprechend umwandelt und kodifiziert werden, um im Rechner 7 verarbeitet zu werden.

## Ansprüche

1. Rechnergesteuerte Vorrichtung zur automatischen Verteilung von Brennstoffen, Fluessiggas und anderen Fluiden aus einem Tankwagen, **dadurch gekennzeichnet**, dass:
- ein optischer Sensor-Transduktor (30, 34, 35, 36) vorgesehen ist, der einem mechanischen Volumenzaehler (32) des Tankwagens (1) zugeordnet ist und
- mit einer zentralen Steuereinheit (10), die mit einem an Bord des Tankfahrzeuges (1) vorgesehenen Rechner (7) wirkverbunden ist, der die Abgabe des Brennstoffes steuert und
- eine optische leitende Verbindung (38, 39, 40, 41) fuer den Zulauf und den Ruecklauf von Signalen zwischen dem Transduktor-Sensor (30, 34, 35, 36) und der Steuereinheit (10) vorgesehen ist.

2. Rechnergesteuerte Vorrichtung, nach Patentanspruch 1, **dadurch gekennzeichnet**, dass der Transduktor-Sensor (30, 34, 35, 36) eine drehbar gelagerte Scheibe (34) aufweist, die mit umfangseitig angeordneten Ausnehmungen oder Sektoren (35) ausgeruestet ist und auf einer Verlaengerung (33) der Welle (32) eines mechanischen Volumenzaehlers des Tankwagens (1) angeordnet ist und periodisch zu einer Unterbrechung der optischen Leitungsverbindung (38, 39; 40, 41) fuer den Vorlauf und den Ruecklauf der Lichtsignale fuehrt.

3. Rechnergesteuerte Vorrichtung, nach Patentanspruch 2, **dadurch gekennzeichnet**, dass die optische Wirkverbindung ein Kabel (43) aus optischen Faserbuendeln (38, 39; 40, 41) aufweist, das in Uebereinstimmung mit einem Schitz (37) in der Vorrichtung (36) unterbrochen ist und, dass sich in dieser Vorrichtung (36) die beiden Kabelenden (38, 39; 40, 41) gegenueberstehen.

4. Rechnergesteuerte Vorrichtung, nach Patentanspruch 3, **dadurch gekennzeichnet**, dass das Kabel (43) zwei Faserbuendelpaare (38, 39; 40, 41) aufweist, die sich in der Vorrichtung (36) gegenueberstehen und dass die Fasern (38, 39) eines Paares mit derartigem Abstand nebeneinander angeordnet sind (Fig. 3), der kleiner ist als die Breite der Ausnehnumgen oder Sektoren (35).

5. Rechnergesteuerte Vorrichtung, nach einem der Ansprueche 1 bis 4, **dadurch gekennzeichnet**, dass eine Thermosonde (21) zur Messung der Gastemperatur im Inneren des Tanks (2) vorgesehen ist.

6. Rechnergesteuerte Vorrichtung, nach Patentanspruch 5, **dadurch gekennzeichnet**, dass die Thermosonde (21) mit der Hauptsteuereinheit (10) in Wirkverbindung steht.

7. Rechnergesteuerte Vorrichtung, nach Patentanspruch 6, **dadurch gekennzeichnet**, dass die Hauptsteuereinheit (10) ein Anzeigefeld zum Vergleich mit den Daten an einer mechanischen Messvorrichtung des Tankwagens aufweist.

8. Rechnergesteuerte Vorrichtung, nach Patentanspruch 7, **dadurch gekennzeichnet**, dass die Hauptsteuereinheit (10) eine Lichtquelle und eine Lichterfassungseinrichtung aufweist, die mit dem optisch leitenden Faserkabel in Verbindung stehen.

9. Rechnergesteuerte Vorrichtung, nach Patentanspruch 8, **dadurch gekennzeichnet**, dass die Lichtquelle und die Lichterfassungseinrichtung bei abklappbarem Fuehrerhaus fest am Rahmen des Tankfahrzeuges angeordnet ist.

FIG. 1

FIG. 2

FIG. 3